# EUROPÄISCHE PATENTANMELDUNG

(11) **EP 1 762 751 A1**
(43) Veröffentlichungstag der Anmeldung: **14.03.2007**
(21) Anmeldenummer: 06017547.8
(22) Anmeldetag: 23.08.2006
(51) Int. Cl.: F16F 15/32

(54) **Haltefeder für ein Unwuchtausgleichsgewicht**

(30) Priorität: 12.09.2005 DE 102005043331
(71) Anmelder: Dionys Hofmann GmbH, 72461 Albstadt (DE)
(72) Erfinder: Schwenold, Hubert, 72474 Winterlingen 2 (DE); Heller, Karl-Heinz, 72406 Bisingen (DE); Seeh, Günther, 78579 Neuhausen (DE)
(74) Vertreter: Eisenführ, Speiser & Partner

(57) **Zusammenfassung**

Eine Haltefeder 1, mit welcher ein Unwuchtausgleichsgewicht am Felgenhorn eines Fahrzeugrades zu befestigen ist, mit zwei Federschenkeln, von denen der eine Federschenkel 2 mit einer Fläche 4 am Felgenhorn anliegt und der andere Federschenkel 3 am Unwuchtausgleichsgewicht anliegt oder befestigt ist, wobei an der am Felgenhorn anliegenden Fläche 4 des Federschenkels 2 wenigstens ein Vorsprung 5, welche eine abgerundete Oberfläche 6 aufweist, vorgesehen ist.

## Beschreibung

Die Erfindung betrifft eine Haltefeder, mit welcher ein Unwuchtausgleichsgewicht am Felgenhorn eines Fahrzeugrades zu befestigen ist, nach dem Oberbegriff des Patentanspruches 1.

Eine derartige Haltefeder weist in bekannter Weise zwei Federschenkel auf, von denen der eine Federschenkel am Felgenhorn anliegt und der andere Federschenkel am Unwuchtausgleichsgewicht anliegt oder befestigt ist. Das Unwuchtausgleichsgewicht soll positionssicher an der Unwuchtausgleichsstelle am Felgenhorn befestigt werden. Dadurch soll ein Verrutschen oder Lösen des Unwuchtausgleichsgewichts verhindert werden. Insbesondere bei solchen Kraftfahrzeugrädern, bei denen die Felgen lackiert sind, beispielsweise bei Leichtmetallfelgen aus Aluminium oder Aluminiumlegierung besteht die Gefahr der Beschädigung der Lackschicht und auch des darunterliegenden Felgenmaterials, wenn beispielsweise durch in die Haltefeder eingeformte Wiederhaken auch bei solchen Felgen die erforderliche Haltekraft erreicht werden soll. Beim Befestigen und beim Lösen der Feder wirken die Wiederhaken spanabhebend und zerstören die Lackschicht sowie das darunter befindliche Felgenmaterial.

Aufgabe der Erfindung ist es, eine Haltefeder der eingangs genannten Art zu schaffen, welche die erforderliche Haltekraft ohne die Gefahr der Zerstörung der Felgenlackierung und/oder des Felgenmaterials beim Befestigen und beim Lösen des Unwuchtausgleichsgewichts erreicht wird.

Diese Aufgabe wird erfindungsgemäß durch die Merkmale des Patentanspruches 1 gelöst. Die Unteransprüche beinhalten vorteilhafte Weiterbildungen der Erfindung.

Bei der Erfindung ist in der am Felgenhorn anliegenden Fläche des Federschenkels wenigstens ein Vorsprung mit einer abgerundeten Oberfläche vorgesehen. Auf diese Weise erreicht man eine punktuelle Haltekrafterhöhung an der Haltefeder ohne die Gefahr der Beschädigung der Felgenlackierung und des darunter befindlichen Felgenmaterials. Auch bei lackierten Felgen, insbesondere Leichtmetallfelgen wird durch die punktuelle Haltekrafterhöhung eine positionsgerechte Fixierung des Unwuchtausgleichsgewichts in der gewünschten Unwuchtausgleichsposition am Kraftfahrzeugrad gewährleistet.

Der Vorsprung kann bei der Formgebung der Haltefeder oder durch nachträgliche Formgebung, beispielsweise als Eindrückung, insbesondere Sicke ausgebildet sein. Da bereits ein Vorsprung zur Erzielung einer ausreichenden Haltekraft ausreicht, wird bevorzugt ein Vorsprung vorgesehen. Dieser befindet sich in der Nähe des Endes des Federschenkels und liegt in der Mitte des Federschenkels. Der Abstand des Scheitelpunktes des Vorsprungs vom Ende des Federschenkels kann etwa 0,5 mm bis 2,5 mm, insbesondere etwa 1,0 mm betragen. Der Abstand kann auch geringer sein und, soweit es die Abmessungen der Haltefeder erlauben, kann der Abstand auch größer, z.B. bis zu 10,0 mm bemessen sein. Die Höhe des Vorsprungs beträgt etwa 0,1 mm bis 0,5 mm, insbesondere 0,3 mm. Die Höhe des Vorsprungs kann auch größer als 0,5 mm sein, falls eine ausreichende Haltekraft ohne Beschädigung des Felgenmaterials erreicht wird.

Die Oberfläche des Vorsprungs kann nach allen Richtungen hin abgerundet sein. Es ist jedoch auch möglich, die Oberfläche des Vorsprungs nur in Bewegungsrichtung beim Befestigen und Lösen der Haltefeder am Felgenhorn abzurunden. Bei einer derartigen Ausführungsform kann die abgerundete Oberfläche an beiden Seiten mit etwa parallelen und im wesentlichen in Bewegungsrichtung beim Befestigen und Lösen der Haltefeder sich erstreckende Kanten begrenzt werden. Diese Kanten gewährleisten eine zusätzliche Sicherheit des Positionierens der Haltefeder und des befestigten Unwuchtausgleichsgewichts, insbesondere in Felgenumfangsrichtung.

Der Durchmesser des Vorsprungs oder die Länge des Vorsprungs in Bewegungsrichtung beim Befestigen oder Lösen der Haltefeder kann vorzugsweise etwa 0,5 mm bis 2,0 mm, insbesondere 1,5 mm betragen. Bei entsprechenden Abmessungen der Haltefeder können dies Abmessungen bis zu 10,0 mm betragen.

Bei einem Vorsprung, dessen abgerundete Oberfläche beidseits durch etwa parallel sich erstreckenden Kanten begrenzt ist, kann die Länge des Vorsprungs etwa doppelt so groß bemessen sein wie die Breite, beispielsweise beträgt die Länge etwa 2,0 mm und die Breite etwa 1,0 mm.

Anhand der Figuren wird an Ausführungsbeispielen die Erfindung noch näher erläutert.

Es zeigt
- Fig. 1: ein erstes Ausführungsbeispiel;
- Fig. 2: ein zweites als Sicherheitsfeder ausgebildetes Ausführungsbeispiel;
- Fig. 3: ein Federschenkelende mit einem nach allen Richtungen hin abgerundeten Vorsprung; und
- Fig. 4: ein Federende mit einem nur in Bewegungsrichtung beim Befestigen und Lösen der Haltefeder am Felgenhorn abgerundeten Vorsprung.

Die dargestellten Ausführungsbeispiele zeigen jeweils eine Haltefeder 1, welche zwei Federschenkel 2 und 3 aufweist. Der Federschenkel 2 besitzt eine am Felgenhorn anliegende Fläche 4 an seiner Innenseite. Mit dem anderen Federschenkel 3 wird das nicht näher dargestellte Unwuchtausgleichsgewicht am Felgenhorn des Fahrzeugrades mit Hilfe der Kraft der Haltefeder 1 angedrückt. Es ist auch möglich, den Federschenkel 3 fest mit dem Unwuchtausgleichsgewicht zu verbinden.

An der innenliegenden Fläche 4, welche am Felgenhorn anliegt, besitzen die Ausführungsbeispiele in der Nähe der Enden der jeweiligen Federschenkel 2 Vorsprünge 5 mit abgerundeten Oberflächen 6.

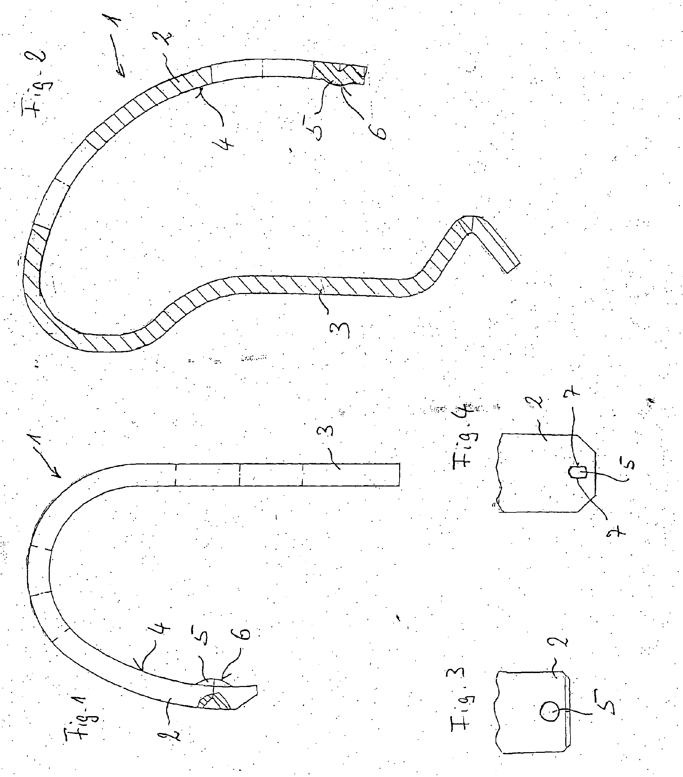

Die abgerundete Oberfläche 6 des jeweiligen Vorsprungs 5 kann kalottenförmig, insbesondere kugelkalottenförmig ausgebildet sein. Bei dieser'Ausführungsform ist die Oberfläche 6 in allen Richtungen abgerundet. In Draufsicht ist eine derartige Ausführungsform des Vorsprungs 5 in Fig. 3 dargestellt.

Bei der in Fig. 4 dargestellten Ausführungsform des Vorsprungs 5 ist die Oberfläche 6 nur in Montagerichtung bzw. Bewegungsrichtung beim Befestigen und Lösen der Haltefeder 1 am Felgenhorn abgerundet. Beidseits ist die abgerundete Oberfläche 6 von Kanten 7 begrenzt. Diese Kanten 7 können relativ scharfkantig ausgebildet sein. Hierdurch wird eine zusätzliche Positionsstabilität in Umfangsrichtung des Felgenhorn gewährleistet.

Die Erfindung ist nicht auf die in den Fig. 1 und 2 dargestellten Ausführungsformen der Haltefeder 1 beschränkt. Sie eignet sich bei allen gängigen und an die jeweiligen Formen der Unwuchtäusgleichsgewichte und Felgenhornformen angepassten Haltefedern.

Die Dimensionierungen der Vorsprünge 5 und ihr Abstand vom jeweiligen Ende des Federschenkels 2 ist im obigen Text der Beschreibung für bevorzugte Ausführungsformen angegeben.

Die Haltefeder 1 kann noch mit einer Oberflächenbeschichtung ausgestattet sein. Fein verteilt in dieser Oberflächenschicht ist bevorzugt eine Al-Pigmentierung vorgesehen. Die Schichtdicke kann größenordnungsmäßig 40 µm bis 120 µm betragen:

Der jeweilige Vorsprung 5 kann durch eine Eindrückung des Federmaterials von der Außenseite des Federschenkels her gebildet werden, wie es in den Ausführungsbeispielen der Fig. 1 und 2 dargestellt ist. Es ist jedoch auch möglich, bei der Formgebung der Feder den Vorsprung 5 an der Innenseite, d.h. an der am Felgenhorn anliegenden Fläche 4 am Federschenkel 2 vorzusehen. Bei den dargestellten Ausführungsbeispielen ist jeweils ein Vorsprung 5 vorgesehen. Anstelle dieser bevorzugten Ausführungsformen können auch mehrere Vorsprünge jeweils in der am Felgenhorn anliegenden Fläche 4 des Federschenkels 2 vorgesehen sein.

Die dargestellten Haltefedern eignen sich bevorzugt zur Befestigung von Auswuchtgewichten für Kraftfahrzeugräder.

### Bezugszeichenliste:

- 1: Haltefeder
- 2: am Felgenhorn anliegender Federschenkel
- 3: Federschenkel, welcher am Unwuchtausgleichsgewicht anliegt oder mit diesem fest verbunden ist
- 4: am Felgenhorn anliegende Fläche des Federschenkels 2
- 5: Vorsprung
- 6: Oberfläche des Vorsprungs
- 7: parallele Kanten am Vorsprung

## Patentansprüche

1. Haltefeder, mit welcher ein Unwuchtausgleichsgewicht am Felgenhorn eines Fahrzeugrades zu befestigen ist, mit zwei Federschenkeln, von denen der eine Federschenkel mit einer Fläche am Felgenhorn anliegt und der andere Federschenkel am Unwuchtausgleichsgewicht anliegt oder befestigt ist,
**dadurch gekennzeichnet, dass** an der am Felgenhorn anliegenden Fläche (4) des Federschenkels (2) wenigstens ein Vorsprung (5); welcher eine abgerundete Oberfläche (6) aufweist, vorgesehen ist.

2. Haltefeder nach Anspruch 1,
**dadurch gekennzeichnet, dass** die Oberfläche (6) des Vorsprungs (5) wenigstens in Bewegungsrichtung beim Befestigen der Haltefeder (1) am Felgenhorn und Lösen der Haltefeder vom Felgenhorn abgerundet ist.

3. Haltefeder nach Anspruch 1 oder 2,
**dadurch gekennzeichnet, dass** die abgerundete Oberfläche (6) an beiden Seiten mit etwa parallelen und im wesentlichen in Bewegungsrichtung der Montage bzw. Demontage der Haltefeder sich erstreckenden Kanten (7) begrenzt ist.

4. Haltefeder nach Anspruch 1 oder 2,
**dadurch gekennzeichnet, dass** die Oberfläche (6) des Vorsprungs (5) in allen Richtungen abgerundet ist.

5. Haltefeder nach einem der Ansprüche 1 bis 4,
**dadurch gekennzeichnet, dass** der Durchmesser des Vorsprungs (5) oder die Länge des Vorsprungs (5) in Montagerichtung beim Befestigen oder Lösen der Haltefeder (1) 0,5 mm bis 10,0 mm beträgt.

6. Haltefeder nach Anspruch 3 oder 5,
**dadurch gekennzeichnet, dass** der Abstand der beiden Kanten (7) voneinander etwa der Hälfte der Länge des Vorsprungs (5) in Montagerichtung entspricht.

7. Haltefeder nach einem der Ansprüche 1 bis 6,
**dadurch gekennzeichnet, dass** die Höhe des Vorsprungs (5) mindestens 0,1 mm beträgt.

8. Haltefeder nach einem der Ansprüche 1 bis 7,
**dadurch gekennzeichnet, dass** der Scheitelpunkt des Vorsprungs (5) vom Ende des Federschenkels (2) einen Abstand von > 0 mm bis 10,0 mm aufweist.

9. Haltefeder nach einem der Ansprüche 1 bis 8,
**dadurch gekennzeichnet, dass** die Oberfläche der Haltefeder beschichtet ist.
